# EUROPÄISCHE PATENTSCHRIFT

(11) **EP 2 041 324 B1**
(45) Veröffentlichungstag und Bekanntmachung des Hinweises auf die Patenterteilung: **31.07.2013**
(21) Anmeldenummer: 07786792.7
(22) Anmeldetag: 21.06.2007
(51) Int. Cl.: C21B 7/00, G01S 17/00

(54) **INDUSTRIEANLAGE MIT EINEM SICHERHEITSRELEVANTEN BEREICH**
INDUSTRIAL PLANT HAVING SAFETY-RELEVANT AREA
INSTALLATION INDUSTRIELLE AVEC ZONE DE SECURITE

(30) Priorität: 17.07.2006 DE 102006032955
(43) Veröffentlichungstag der Anmeldung: 01.04.2009
(73) Patentinhaber: Siemens Aktiengesellschaft, 80333 München (DE)
(72) Erfinder: TOMASIC, Marko, 91054 Buckenhof (DE)
(86) Internationale Anmeldenummer: PCT/EP2007/056214
(87) Internationale Veröffentlichungsnummer: WO 2008/009536

(56) Entgegenhaltungen:
- EP-A- 1 113 214
- WO-A-88/08546
- WO-A-2005/050129
- DE-A1-102004 047 022
- US-A1- 2002 003 617
- US-A1- 2004 118 980

## Beschreibung

Die Erfindung betrifft eine Industrieanlage zur Erzeugung oder Verarbeitung von flüssigem oder glühendem Metall, insbesondere eine Hochofenanlage oder ein Walzwerk, in welcher in der direkten Umgebung des flüssigen oder glühenden Metalls ein sicherheitsrelevanter Bereich gebildet ist, in dem die Anwesenheit einer Person zumindest teilweise nicht erlaubt ist.

In modernen Industrieanlagen zur Verarbeitung von flüssigem oder glühendem Metall ergeben sich vielseitige Überwachungsaufgaben, die einerseits das Metallgut selbst betreffen, wie z.B. bei einer Überwachung einer Schmelzenoberfläche mittels Lasers gemäß WO 88/08546 A1, und andererseits das Betriebspersonal in sicherheitsrelevanten Raumbereichen.

Vorrichtungen zur Überwachung von Raumbereichen sind z.B. bekannt aus DE 101 63 534 A1, US 2005/0078297 A1, DE 102 21 578 A1 und DE 10 2004 047022 A1. Hierbei werden Sensoren verwendet, die eine dreidimensionale Information über den überwachten Bereich liefern. So beruht das Prinzip des 3D-CMOS-Sensors darauf, dass ein Laser und ein elektronischer Verschluss exakt synchronisiert sind. Der Verschluss öffnet exakt mit der Emission des Laserimpulses. Der extrem kurze Lichtimpuls beleuchtet ein Hindernis - sofern vorhanden - und der reflektierte Lichtimpuls trifft auf den 3D-CMOS-Bildwandler. Der Sensor registriert die Laufzeiten, die als Maß für die Entfernung und die Form des Hindernisses ausgewertet werden. Als Sender kann eine Leuchtdiode oder ein Laser verwendet werden. Ein Pixel des CMOS-Sensors kann jeweils eine Fotodiode und einen zugeordneten Pixelkondensator umfassen, der bei geöffnetem Zeitfenster durch Belichtung der Fotodiode entladen wird.

Moderne Industrieanlagen müssen derart geplant und betrieben werden, dass die Personengefährdung auf ein Mindestmaß reduziert ist. In der Regel werden deshalb bestimmte Anlagenteile mit hohem Gefährdungspotential abgeschottet oder der.Zugang zu einigen Bereichen wird versperrt. Hierzu können Schutzgitter und Tore vorhanden sein.

Zur Abschottung oder Kontrolle gefährdeter Bereiche um Maschinen oder in einfachen Industrieanlagen sind auch so genannte Schaltmatten oder auch optische Systeme, z.B. Lichtschranken, bekannt. Schaltmatten haben ebenso wie Zäune mit Zugangstoren einen hohen baulichen Aufwand. Optische oder strahlungsbasierte Systeme werden unter extremen Umgebungsbedingungen nicht in Erwägung gezogen.

Der Erfindung liegt die Aufgabe zugrunde, bei einer Industrieanlage mit einer sehr starken Wärmeemission, nämlich bei einer Industrieanlage zur Erzeugung oder Verarbeitung von flüssigem oder glühendem Metall, einen sicherheitsrelevanten Bereich in baulich einfacher Weise abzusichern und zu kontrollieren.

Diese Aufgabe wird gemäß der Erfindung bezogen auf die eingangs genannte Industrieanlage gemäβ Anspruch 1 gelöst d.L. durch eine Überwachungseinrichtung für den sicherheitsrelevanten Bereich, umfassend:
- eine Detektoreinheit, welche von einer anwesenden Person ausgehende elektromagnetische Strahlung oder das Ausbleiben von durch eine anwesende Person ausgeblendeter elektromagnetischer Strahlung erfasst,
   wobei die Detektoreinheit auf einer Kombination von mindestens zwei der nachfolgenden Detektortypen beruht:
   - einem Bewegungsmelder,
   - einer Lichtschranke,
   - einer Videokamera oder einer CCD-Kamera,
   - einer Thermokamera,
   - einer Kombination aus Lichtsender und Halbleitermat rix-Sensor, insbesondere in CMOS-Technologie,
- eine Auswerteeinheit, die aus Ausgangsdaten der Detektoreinheit die Anwesenheit einer Person erkennt,
- eine mit der Auswerteeinheit in Verbindung stehende Kontrolleinheit, welche bei Anwesenheit einer Person im sicherheitsrelevanten Bereich automatisch eine gegen die Anwesenheit der Person wirkende Aktion einleitet, und
- eine Anlagensteuerungseinrichtung, die derart mit der Kontrolleinheit in Verbindung steht, dass bei Erkennen einer gefährdeten Person von der Anlagensteuerungseinrichtung automatisch, insbesondere in Echtzeit, z.B. online und/oder ohne Zwischenschaltung menschlicher Eingaben, ein die Gefährdung reduzierender Eingriff in den Anlagenbetrieb ausführbar ist.

Die Erfinder haben erkannt, dass eine strahlungsbasierte Überwachungseinrichtung für einen sicherheitsrelevanten Bereich auch in Industrieanlagen mit hoher Wärme- und Infrarotstrahlungsemission die geforderte Sicherheit gewährleisten kann. Sie durchbrechen damit ein technisches Vorurteil. Die Fachwelt hat solche Detektoreinheiten für Hochofenanlagen oder Walzwerke bislang nicht in Erwägung gezogen. Stattdessen wird dort nach wie vor hoher Aufwand mit mechanischen Zugangsbarrieren getrieben. Die Erfindung hat den Vorteil, dass aufwändige mechanische Verriegelungsvorrichtungen, wie unzählige elektrisch verriegelte Tore in einer Umzäunung usw., nicht nötig sind, um ausreichende Personensicherung zu gewährleisten. Der Verzicht oder die Verminderung solcher Schutzgitter und/oder Tore hat auch im Falle der Anlagenwartung erhebliche Vorteile, weil dann diese Zäune und Tore den Zugang zur Anlage nicht behindern.

Durch die Kombination verschiedener Detektortypen lässt sich ein besonders hoher Sicherheitsstandard erzielen.

Von besonderem Vorteil ist es, falls in der Detektoreinheit Detektorprinzipien mit unterschiedlicher Detektionsdimensionalität verwendet sind, so z.B. ein eindimensionaler Sensor oder eine Linienabtastung, insbesondere eine Lichtschranke, und/oder ein zweidimensionaler Sensor oder eine Flächenabtastung, insbesondere ein Lichtvorhang oder eine 2D-Kamera, und/oder ein dreidimensionaler Sensor, letzterer insbesondere umfassend einen Lichtsensor, einen Halbleitermatrix-Sensor mit - pro Pixel - einer Fotodiode und einem Kondensator zur Integration des zurückgeworfenen Senderlichts sowie eine Laufzeitbestimmungseinheit.

Nach einer besonders bevorzugten Ausführungsform ist die Detektoreinheit zur Erzeugung eines Bildes aus dem sicherheitsrelevanten Bereich hergerichtet und die Auswerteeinheit führt eine Bildverarbeitung aus. Vorzugsweise wird bei der Bildverarbeitung eine Objekt- oder Mustererkennung ausgeführt, vorzugsweise basierend auf einem neuronalen Netz, so dass eine Person von einem nicht-menschlichen Objekt unterscheidbar ist.

Dadurch ist es neben der Erkennung einer Persongefährdung auch möglich, sonstige ungeplante oder nicht regelmäßige Bewegungen, z.B. von Fahrzeugen oder herabstürzenden Teilen, in der Anlage zu erkennen.

Nach einer bevorzugten Weiterbildung ist in der Industrieanlage mindestens ein weiterer sicherheitsrelevanter Bereich gebildet, der oder die sich in seinem/ihrem Gefahrenpotential von dem erstgenannten sicherheitsrelevanten Bereich unterscheidet/n, wobei der bzw. die weiteren sicherheitsrelevanten Bereich von der Überwachungseinrichtung gesondert auf die Anwesenheit einer Person überwachbar ist/sind. Dabei weist vorzugsweise mindestens einer der sicherheitsrelevanten Bereiche eine Gefahrenstufe zwischen "höchste Gefährdung" und "keine Gefährdung" auf.

Dabei ist es von ganz besonderem Vorteil, falls der Eingriff in seiner Intensität in Abhängigkeit vom Gefahrenpotential desjenigen sicherheitsrelevanten Bereichs ausführbar ist, in welchem die unerlaubte Person erkannt wurde. Daraus ergibt sich vorteilhaft die Möglichkeit zu einem "sanften" Anhalten der Anlage, indem z.B. bei einem Walzwerk die Walz- oder Durchsatzgeschwindigkeit zunächst vermindert wird, wenn eine Person in einem Bereich mittleren Gefährdungspotentiales detektiert wird, und die Walz- oder Durchsatzgeschwindigkeit erst dann auf Null reduziert wird, d.h. die Anlage angehalten wird, falls die Person in den Bereich höchsten Gefährdungspotentials eindringt.

Bei einem Stahlwerk oder einem Hochofen kann die Reaktion auf das Eindringen einer Person in einer Verzögerung und/oder in einer vollständigen Unterbrechung eines Anstichs bestehen.

Ebenfalls bevorzugt weist die Industrieanlage eine Eingabevorrichtung zur Festlegung eines Verriegelungsbereichs durch das Bedienpersonal einer Leitwarte auf. Dem Bedienpersonal ist es damit in flexibler Weise möglich, etwa innerhalb eines Bereichs mittleren Gefährdungspotentials einen Ausschnitt, den so genannten Verriegelungsbereich, zu definieren, der vorübergehend eine höhere oder die höchste Gefährdungsstufe aufweist, etwa weil in diesem Bereich kurzfristig eine Maschine mit erhöhtem Gefährdungspotential abgestellt ist.

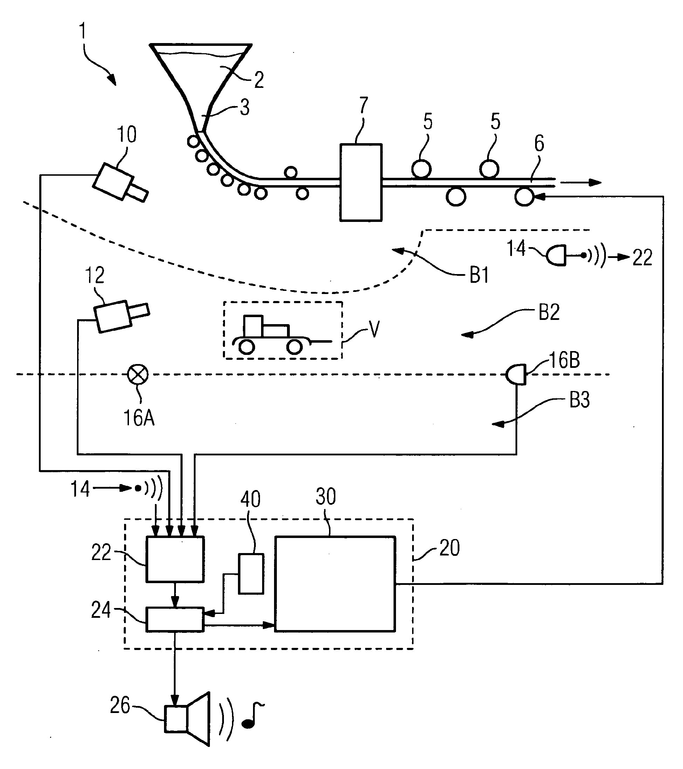

Ein Ausführungsbeispiel einer Industrieanlage nach der Erfindung wird nachfolgend anhand der Zeichnung näher erläutert. Die einzige Figur zeigt als Industrieanlage 1 eine Stranggussanlage mit Warmwalzwerk in stark schematisierter Form. Die Erfindung ist auch in einem Kaltwalzwerk anwendbar, wo der Stahl z.B. heißer als 100°C ist.

Flüssiges Metall 2, z.B. Eisen, wird durch eine Trichterkokille 3 und Umlenkrollen von einer vertikalen in eine horizontale Vorschubrichtung geführt. In der Horizontalen durchläuft das noch glühende Band 6 mehrere Walzgerüste 5, nachdem es in einem Induktionsofen 7 erwärmt wurde.

Um den Strangguss- und Walzbereich der Industrieanlage 1 sind mehrere sicherheitsrelevante Bereiche B1, B2, B3 gebildet, welche durch eine Überwachungseinrichtung jeweils gesondert für sich überwacht werden. Ziel der Überwachung ist es festzustellen, welche Vorgänge in dem jeweiligen Bereich B1, B2, B3 vorgehen und insbesondere, ob in dem jeweiligen Bereich B1, B2, B3 in unerlaubter Weise eine Person eingedrungen ist, welche in diesem Bereich einer unzulässigen Gefährdung ausgesetzt wäre. Die sicherheitsrelevanten Bereiche umfassen einen sicheren Bereich B3, einen weniger gefährlichen Bereich B2 und einen sehr gefährlichen Bereich B1.

Die Überwachungseinrichtung, insbesondere für die sicherheitsrelevanten Bereiche B1 und B2, umfasst eine Detektoreinheit mit mehreren verschiedenen Detektoren. Diese sind eine CCD-Kamera oder Videokamera 10, welche ein zweidimensionales Bild (Projektion) des überwachten Bereichs erzeugt, ferner einen dreidimensionalen Bildsensor, aufweisend eine Kombination 12 aus einem Lichtsender und einem in unmittelbarer Nachbarschaft zum Lichtsender angeordneten Halbleitermatrix-Sensor, des Weiteren einen Bewegungsmelder 14 und eine Lichtschranke 16A, 16B. Der Bewegungsmelder 14 basiert beispielsweise auf dem so genannten pyroelektrischen Effekt. Die Lichtschranke kann mit sichtbarem oder unsichtbarem Licht betrieben werden. Als 3D-Sensor kommt beispielsweise ein Halbleitermatrix-Sensor in CMOS-Technologie zum Einsatz, wie er beispielsweise in DE 10 2004 047022 A1, DE 101 63 534 A1 oder DE 102 21 578 A1 beschrieben ist.

Durch das Zusammenwirken dieser unterschiedlichen Detektortypen und Detektorprinzipien ist es einer Auswerteeinheit 22, welcher die Ausgangsdaten der genannten Detektoren drahtlos oder leitungsgebunden zugeführt sind, in besonders sicherer Weise möglich, die Anwesenheit einer Person im sicherheitsrelevanten Bereich B1 oder B2 zu erkennen und beispielsweise von durch Störstrahlung aus dem Strangguss- oder Walzbereich erzeugten Artefakten zu unterscheiden. Zur weiteren Absicherung des Personendetektionsprozesses findet in der Auswerteeinheit 22 außerdem mittels eines neuronalen Netzes eine Objekt- und Mustererkennung des von der Detektoreinheit erzeugten Bildes statt.

Die unterschiedlichen sicherheitsrelevanten Bereiche B1, B2 können bildmäßig dadurch gesondert überwacht werden, dass für jeden Bereich eine gesonderte Kamera oder ein gesonderter Matrix-Detektor vorhanden ist, d.h. dass die unterschiedlichen Bereiche B1, B2 durch die jeweiligen Erfassungskegel der zugeordneten Detektoren definiert und festgelegt sind. Alternativ können die Bereiche B1, B2 von einem gemeinsamen Detektor, vorzugsweise von einem 3D-Sensor, gemeinsam überwacht werden, wobei die Unterscheidung, ob sich eine unerwünschte Person im Bereich B1 oder im Bereich B2 befindet, dann auswerteseitig anhand von Positionsdaten vorgenommen werden kann, welche vom Detektor geliefert werden.

In einer der Auswerteeinheit 22 funktionell nachgeordneten Kontrolleinheit 24 wird für den Fall, dass eine unerwünschte Person in einem sicherheitsgefährdeten Bereich B1 oder B2 detektiert ist, eine gegen die Anwesenheit dieser Person wirkende Aktion eingeleitet. Dies kann darin bestehen, dass die Person zunächst, z.B. für kurze Zeit, durch ein Licht- oder Tonsignal, z.B. mittels eines Lautsprechers 26, gewarnt wird. In einer höheren Eskalationsstufe wirkt die Kontrolleinheit 24 unmittelbar funktionell auf die Anlagensteuerungseinrichtung 30, welche zusammen mit der Auswerteeinheit 22 und der Kontrolleinheit 24 in einer Leitwarte 20 der Industrieanlage 1 untergebracht ist. Für den Fall, dass die Person nach einer kurzen akustischen Warnzeit immer noch im gefährdeten Bereich B1 oder B2 ist, wird die Walzstraße 5 angehalten bzw. die Durchsatzgeschwindigkeit vermindert. Dies geschieht, ohne dass ein Eingriff des Bedienpersonals erforderlich wäre.

Insbesondere im Fall der Überwachung der sicherheitsrelevanten Bereiche B1, B2 durch einen 3D-Sensor ist es von besonderem Vorteil, dass das Bedienpersonal in der Leitwarte 20 über eine Eingabeeinrichtung 40 einen Verriegelungsbereich V festlegen kann, welcher kurzfristig in seinem Gefährdungspotential als erhöht eingestuft wird. Der dargestellte Verriegelungsbereich V kann dadurch z.B. kurzfristig in das Gefährdungspotential des Bereichs B1 eingestuft werden, d.h. falls eine Person in den Verriegelungsbereich V eintritt, wird sofort eine Aktion der höchsten Eskalationsstufe ausgelöst, z.B. das sofortige Anhalten des Walzwerks.

Nach einer Variante wird als Kamera eine Thermo- oder thermische Kamera verwendet, wodurch sich der Vorteil ergibt, dass nicht nur Personen in ungewünschten Bereichen identifizierbar sind, sondern auch andere, ungewöhnliche Temperaturverläufe in der Industrieanlage erkennbar sind, etwa, falls an unerwünschter Stelle flüssiges Metall austritt oder heiße Eisenteile herab gefallen sind.

## Patentansprüche

1. Industrieanlage (1) zur Erzeugung oder Verarbeitung von flüssigem oder glühendem Metall (2, 6), insbesondere Hochofenanlage oder Walzwerk, in welcher in der direkten Umgebung des flüssigen oder glühenden Metalls (2) ein sicherheitsrelevanter Bereich (B1) gebildet ist, in dem die Anwesenheit einer Person zumindest zeitweise nicht erlaubt ist,
**gekennzeichnet durch** eine Überwachungseinrichtung für den sicherheitsrelevanten Bereich, umfassend:
a) eine Detektoreinheit (10, 12, 14, 16A, 16B), welche von einer anwesenden Person ausgehende elektromagnetische Strahlung oder das Ausbleiben von **durch** eine anwesende Person ausgeblendeter elektromagnetischer Strahlung erfasst, wobei die Detektoreinheit (10, 12, 14, 16A, 16B) auf einer Kombination von mindestens zwei der nachfolgenden Detektortypen beruht:
- einem Bewegungsmelder (14),
- einer Lichtschranke (16A, 16B),
- einer Videokamera (10) oder einer CCD-Kamera,
- einer Thermokamera,
- einer Kombination (12) aus Lichtsender und Halbleitermatrix-Sensor, insbesondere in CMOS-Technologie,
b) eine Auswerteeinheit (22), die aus Ausgangsdaten der Detektoreinheit (10, 12, 14, 16A, 16B) die Anwesenheit einer Person erkennt,
c) eine mit der Auswerteeinheit (22) in Verbindung stehende Kontrolleinheit (24), welche bei Anwesenheit einer Person im sicherheitsrelevanten Bereich (B1) automatisch eine gegen die Anwesenheit der Person wirkende Aktion einleitet, und
d) eine Anlagensteuerungseinrichtung (30), die derart mit der Kontrolleinheit (24) in Verbindung steht, dass bei Erkennen einer gefährdeten Person von der Anlagensteuerungseinrichtung (30) automatisch, insbesondere in Echtzeit, ein die Gefährdung reduzierender Eingriff in den Anlagenbetrieb ausführbar ist.

2. Industrieanlage (1) nach Anspruch 1,
**dadurch gekennzeichnet, dass** die Detektoreinheit (10, 12, 14, 16A, 16B) auf mindestens einem und vorzugsweise auf einer Kombination von mehreren der nachfolgenden Detektorprinzipien beruht:
- 1D-Sensor oder Linienabtastung, insbesondere Lichtschranke (16A, 16B),
- 2D-Sensor oder Flächenabtastung, insbesondere Lichtvorhang oder 2D-Kamera,
- 3D-Sensor, insbesondere umfassend einen Lichtsender, einen Halbleitermatrix-Sensor mit - pro Pixel - einer Photodiode und einem Kondensator zur Integration des zurückgeworfenen Senderlichts und eine Laufzeitbestimmungseinheit.

3. Industrieanlage (1) nach Anspruch 1 oder 2,
**dadurch gekennzeichnet, dass** die Detektoreinheit (10, 12) ein Bild aus dem sicherheitsrelevanten Bereich (B1) erzeugt und dass die Auswerteeinheit (22) eine Bildverarbeitung ausführt.

4. Industrieanlage (1) nach einem der Ansprüche 1 bis 3,
**dadurch gekennzeichnet, dass** die Bildverarbeitung eine Objekt- oder Mustererkennung ausführt, vorzugsweise basierend auf einem neuronalen Netz, so dass eine Person von einem nicht-menschlichen Objekt unterscheidbar ist.

5. Industrieanlage (1) nach einem der Ansprüche 1 bis 4,
**dadurch gekennzeichnet, dass** zur Absicherung des sicherheitsrelevanten Bereichs (B1) keine Schutzgitter oder -zäune vorhanden sind oder dass weniger Schutzgitter oder -zäune vorhanden sind, als ohne Überwachungseinrichtung zur Gewährleistung ausreichender oder vorgeschriebener Sicherheit notwendig wären.

6. Industrieanlage (1) nach einem der Ansprüche 1 bis 5,
**dadurch gekennzeichnet, dass** mindestens ein weiterer sicherheitsrelevanter Bereich (B2, B3) gebildet ist, der oder die sich in seinem/ihrem Gefahrenpotential von dem erstgenannten sicherheitsrelevanten Bereich (B1) unterscheidet/n, und dass der bzw. die weiteren sicherheitsrelevanten Bereiche (B2, B3) von der Überwachungseinrichtung gesondert auf die Anwesenheit einer Person überwachbar ist/sind.

7. Industrieanlage (1) nach Anspruch 6,
**dadurch gekennzeichnet, dass** mindestens einer der sicherheitsrelevanten Bereiche (B2) eine Gefahrenstufe zwischen "höchste Gefährdung" und "keine Gefährdung" aufweist.

8. Industrieanlage (1) nach Anspruch 7,
**dadurch gekennzeichnet, dass** der Eingriff in seiner Intensität in Abhängigkeit vom Gefahrenpotential desjenigen sicherheitsrelevanten Bereichs (B1, B2, B3) ausführbar ist, in welchem die unerlaubte Person erkannt wurde.

9. Industrieanlage nach einem der Ansprüche 1 bis 8,
**dadurch gekennzeichnet, dass** der Eingriff bei einem Walzwerk eine Verminderung der Walz- oder Durchsatzgeschwindigkeit und/ oder ein Anhalten der Walzstraße (5) einschließt.

10. Industrieanlage (1) nach einem der Ansprüche 1 bis 8,
**dadurch gekennzeichnet, dass** der Eingriff bei einem Stahlwerk oder Hochofen eine Verzögerung und/ oder eine Unterbrechung eines Anstichs einschließt.

11. Industrieanlage (1) nach einem der Ansprüche 1 bis 10,
**gekennzeichnet durch** eine Eingabeeinrichtung (40) zur Festlegung eines Verriegelungsbereichs (V) durch das Bedienpersonal einer Leitwarte (20).

## Claims

1. Industrial plant (1) for producing or processing liquid or incandescent metal (2, 6), particularly a blast furnace installation or rolling mill in which a safety-relevant area (B1), in which the presence of a person is not permitted at least temporarily, is formed in the direct environment of the liquid or incandescent metal (2), **characterized by** a surveillance device for the safety-relevant area, comprising:
a) a detector unit (10, 12, 14, 16A, 16B) which detects electromagnetic radiation emanating from a present person or the absence of electromagnetic radiation blocked out by a present person, wherein the detector unit (10, 12, 14, 16A, 16B) is based on a combination of at least two of the following detector types:
- a motion detector (14),
- a light barrier (16A, 16B),
- a video camera (10) or a CCD camera,
- a thermal camera,
- a combination (12) of light transmitter and semiconductor matrix sensor, particularly in CMOS technology,
b) an evaluating unit (22) which detects from output data of the detector unit (10, 12, 14, 16A, 16B) the presence of a person, and
c) a control unit (24) connected to the evaluating unit (22), which, when a person is present in the safety-relevant area (B1), automatically initiates an action acting against the presence of the person, and
d) a plant control device (30) which is connected to the control unit (24) in such a manner that when an endangered person is detected, the plant control device (30) can automatically carry out an intervention in the plant operation which reduces the hazard, particularly in real time.

2. Industrial plant (1) according to Claim 1, **characterized in that** the detector unit (10, 12, 14, 16A, 16B) is based on at least one and preferably on a combination of several of the following detector principles:
- 1-D sensor or line scan, particularly light barrier (16A, 16B),
- 2-D sensor or area scan, particularly light curtain or 2D camera,
- 3-D sensor, particularly comprising a light transmitter, a semiconductor matrix sensor with one photodiode and one capacitor per pixel for integrating the reflected transmitter light and a delay determining unit.

3. Industrial plant (1) according to Claim 1 or 2, **characterized in that** the detector unit (10, 12) generates an image from the safety-relevant area (B1) and that the evaluating unit (22) carries out image processing.

4. Industrial plant (1) according to one of Claims 1 to 3, **characterized in that** the image processing carries out object or pattern recognition, preferably on the basis of a neural network, so that a person can be distinguished from a non-human object.

5. Industrial plant (1) according to one of Claims 1 to 4, **characterized in that** there are no protective grids or fences or that there are fewer protective grids or fences for securing the safety-relevant area (B1) than would be necessary for ensuring adequate or prescribed safety without surveillance device.

6. Industrial plant (1) according to one of Claims 1 to 5, **characterized in that** at least one further safety-relevant area (B2, B3) is formed which differs or differ in its/their risk potential from the first-mentioned safety-relevant area (B1) and that the further safety-relevant area or areas (B2, B3) can be monitored separately for the presence of a person by the surveillance device.

7. Industrial plant (1) according to Claim 6, **characterized in that** at least one of the safety-relevant areas (B2) has a danger level of between "maximum hazard" and "no hazard".

8. Industrial plant (1) according to Claim 7, **characterized in that** the intervention can be carried out with its intensity depending on the risk potential of the safety-relevant area (B1, B2, B3) in which the forbidden person has been detected.

9. Industrial plant (1) according to one of Claims 1 to 8, **characterized in that** the intervention, in the case of a rolling mill, includes a reduction of the rate of rolling or of throughput and/or a stopping of the mill train (5).

10. Industrial plant (1) according to one of Claims 1 to 8, **characterized in that** the intervention includes in the case of a steel mill or blast furnace a delay and/or an interruption of an opening of the furnace.

11. Industrial plant (1) according to one of Claims 1 to 10, **characterized by** an input device (40) for establishing a locking area (V) by the operating personnel of a control room (20).

## Revendications

1. Installation ( 1 ) industrielle de production et de traitement de métal ( 2, 6 ), liquide ou incandescent, notamment installation de haut fourneau ou de laminoir, dans laquelle dans l' environnement immédiat du métal ( 2 ) liquide ou incandescent est formée une zone ( B1 ) de sécurité dans laquelle la présence d' une personne n' est pas permise au moins de temps en temps,
**caractérisée par** un dispositif de contrôle de la zone de sécurité comprenant :
a) une unité ( 10, 12, 14, 16A, 16B ) formant un détecteur, qui détecte du rayonnement électromagnétique provenant d' une personne présente ou l' absence de rayonnement électromagnétique supprimé par une personne présente, l' unité ( 10, 12, 14, 16A, 16B ) formant un détecteur reposant sur une combinaison d' au moins deux des types de détecteur suivants :
- un indicateur ( 14 ) de mouvement,
- une cellule ( 16A, 16B ) photoélectrique,
- une caméra ( 10 ) vidéo une caméra CCD,
- une caméra thermique,
- une combinaison ( 12 ) d' émetteur de lumière et de capteur à matrice à semi-conducteur, notamment en technologie CMOS,
b) une unité ( 22 ) d' exploitation, qui reconnaît la présence d' une personne à partir des données qui sortent de l' unité ( 10, 12, 14, 16A, 16B ) formant un détecteur,
c) une unité ( 24 ) de contrôle, qui est en liaison avec l' unité ( 22 ) d' exploitation et qui, en la présence d' une personne dans la zone ( B1 ) de sécurité, lance automatiquement une action agissant à l' encontre de la présence de la personne, et
d) un dispositif ( 30 ) de commande de l' installation, qui est en liaison avec l' unité ( 24 ) de contrôle de manière à pouvoir, lorsqu' il est reconnu qu' une personne est en danger, faire exécuter par le dispositif ( 30 ) de commande de l' installation automatiquement, notamment en temps réel, une intervention dans le fonctionnement de l' installation réduisant la mise en danger.

2. Installation ( 1 )industrielle suivant la revendication 1, **caractérisée en ce que** l' unité ( 10, 12, 14, 16A, 16B ) formant un détecteur repose sur au moins l' un et de préférence sur une combinaison de plusieurs des principes de détecteur suivants :
- capteur en 1D ou balayage linéaire, notamment cellule ( 16A, 16B ) photoélectrique,
- capteur en 2D ou balayage en surface, notamment rideau lumineux ou caméra en 2D,
- capteur en 3D, comprenant, notamment un émetteur de lumière, un capteur à matrice à semi-conducteur ayant -par 2 Pixel- une photodiode et un condensateur pour l' intégration de la lumière de l' émetteur réfléchie et une unité de détermination du temps de parcours.

3. Installation ( 1 )industrielle suivant la revendication 1 ou 2,
**caractérisée en ce que** l' unité ( 10, 12 ) formant détecteur produit une image de la zone ( B1 ) de sécurité et **en ce que** l' unité ( 22 ) d' exploitation effectue un traitement de l' image.

4. Installation ( 1 ) industrielle suivant l' une des revendications 1 à 3,
**caractérisée en ce que** le traitement de l' image effectue une reconnaissance d' objet ou de modèle basée de préférence sur un réseau neuronal de manière à pouvoir distinguer une personne d' un objet qui n' est pas humain.

5. Installation ( 1 ) industrielle suivant l' une des revendications 1 à 4,
**caractérisée en ce que** pour la sécurisation de la zone ( B1 ) de sécurité, il n' y a pas de grille de protection ou de clôture de protection ou il y a moins de grille de protection de clôture de protection que cela ne serait nécessaire pour, sans dispositif de contrôle, assurer une sécurité suffisante ou prescrite.

6. Installation ( 1 ) industrielle suivant l' une des revendications 1 à 5,
**caractérisée en ce qu'** il est formé au moins une autre zone ( B2, B3 ) de sécurité, qui se distingue par son potentiel de danger de la zone ( B1 ) de sécurité mentionnée en premier et **en ce que** la présence d' une personne dans la ou les autres zones ( B2, B3 ) de sécurité peut être contrôlée séparément par le dispositif de contrôle.

7. Installation ( 1 ) industrielle suivant la revendication 6, **caractérisée en ce qu'** au moins une zone ( B2 ) de sécurité a un palier de danger entre "mise en danger très grande" et "pas de mise en danger".

8. Installation ( 1 ) industrielle suivant la revendication 7, **caractérisée en ce que** l' intensité de l' intervention peut dépendre du potentiel de danger de la zone ( B1, B2, B3 ) de sécurité, dans laquelle la personne non autorisée a été reconnue.

9. Installation suivant l'une des revendications 1 à 8, **caractérisée en ce qu'** une intervention dans un laminoir inclut une diminution de la vitesse de laminage ou de la vitesse de passage et/ou un arrêt du train ( 5 ) de laminoir.

10. Installation suivant l'une des revendications 1 à 8, **caractérisée en ce que** l'intervention dans une aciérie ou dans un haut fourneau inclut un ralentissement et/ou une interruption d' une passe.

11. Installation suivant l'une des revendications 1 à 10, **caractérisée par** un dispositif ( 40 ) d' entrée pour la fixation d' une zone ( V ) de verrouillage par le personnel de service d' une salle ( 20 ) de contrôle.
